# EUROPÄISCHE PATENTSCHRIFT

(11) **EP 0 518 104 B1**
(45) Veröffentlichungstag und Bekanntmachung des Hinweises auf die Patenterteilung: **17.01.1996**
(21) Anmeldenummer: 92108734.2
(22) Anmeldetag: 23.05.1992
(51) Int. Cl.: G03B 27/62

(54) **Verfahren und Vorrichtung zum bereichsweisen Ausmessen der Dichte von fotografischen Kopiervorlagen**
Method and device for measuring the density of specific areas of photographic originals
Procédé et dispositif pour mesurer la densité pour des zones limitées des originaux photographiques

(30) Priorität: 07.06.1991 DE 4118812; 26.02.1992 DE 4205922
(43) Veröffentlichungstag der Anmeldung: 16.12.1992
(73) Patentinhaber: Agfa-Gevaert AG, D-51373 Leverkusen (DE)
(72) Erfinder: Benker, Gerhard, Dipl.-Ing., W-8023 Pullach (DE); Klueter, Ulrich, Dr., W-8000 München 19 (DE); Muench, Reimund, Dr., W-8000 München 19 (DE); Nagel, Erich, Dipl.-Ing., W-8011 Anzing (DE); Nitsch, Wilhelm, Dr., W-8000 München 70 (DE); Weinert, Volker, Dipl.-Ing., W-8028 Taufkirchen a.W. (DE)

(56) Entgegenhaltungen:
- WO-A-90/07728
- DE-A- 3 623 643
- DE-A- 3 833 732
- US-A- 5 053 807
- PATENT ABSTRACTS OF JAPAN vol. 6, no. 95 (E-110) 3. Juni 1982 ; & JP-A-57 026 963

## Beschreibung

Die Erfindung betrifft ein Verfahren nach dem Oberbegriff des Anspruchs 1 und eine Vorrichtung zu dessen Durchführung nach dem Oberbegriff des Anspruchs 2.

Eine Methode zum bereichsweisen Ausmessen der Dichte von fotografischen Kopiervorlagen ist bekannt aus der DE-OS 38 33 732, wo ein Film kontinuierlich über eine Abtasteinrichtung hinweg geführt wird, die quer zur Durchlaufrichtung angeordnete Meßzellenzeilen aufweist. Diese Meßzellen liegen dabei außerhalb der Ebene des Filmtransports und der jeweils im Abtastfenster liegende, zur Abtastung anstehende, spaltförmige Bereich der Vorlage wird durch ein um 45° umlenkendes Element über ein Objektiv auf diese Meßzellenzeile abgebildet.

Diese Anordnung ist wegen ihres starren Aufbaus nur in der Lage, kontinuierlich über den Abtastbereich hinweg bewegte Filme abzutasten. Die kleinste abtastbare Filmlänge ist dabei durch den Abstand der vor und hinter dem Bildfenster angeordneten Transporteinrichtungen gegeben. Das ist jedoch in aller Regel deutlich mehr als die Länge einer Bildvorlage, so daß Einzelbilder mit einem Verlängerungsstreifen versehen werden müssen.

Ferner ist aus der WO 90/07728 ein Gerät zum punktweisen Ausmessen von farbigen Kopiervorlagen bekannt. Dieses weist eine Sensoreinrichtung mit einer Photodiodenzeile auf, die in der Abbildungsebene des Abbildungsobjektivs im Bereich der Vorlagenabbildung geradlinig bewegbar ist. Das bekannte Gerät ist nur ein Meßgerät, kein Kopiergerät, in dem auch der Meßvorgang für die Bemessung der Kopierlichtmengen erfolgt. Die Durchführung des Kopiervorgangs in derselben Halterung für die Vorlage ist nicht vorgesehen.

Aufgabe der Erfindung ist es, ein Verfahren der eingangs genannten Art so abzuwandeln, daß wahlweise lange Filme mit einer Vielzahl von Vorlagen und Einzelvorlagen ohne besondere Vorbereitungshandlungen abgetastet werden können.

Diese Aufgabe wird gelöst durch die kennzeichnenden Merkmale des Anspruchs 1. Durch die Ausgestaltung, daß die Abtasteinrichtung über feststehende Einzelvorlagen hinweg bewegt werden kann, ist eine wahlweise Benutzung für Filmstreifen und Einzelvorlagen möglich. Eine Vorrichtung zur Durchführung dieses Verfahrens ergibt sich aus dem Kennzeichen des Anspruchs 2. Danach ist die Abtasteinrichtung in Filmtransportrichtung verschiebbar angeordnet mit einer Ruhestellung am Rand des Kopierfensters derart, daß der Kopiervorgang durch die in der Ruhestellung befindliche Abtasteinrichtung nicht beeinträchtigt wird.

Weitere Einzelheiten und Vorteile der Erfindung ergeben sich aus den Unteransprüchen im Zusammenhang mit der Beschreibung von Ausführungsbeispielen, die anhand der Zeichnung erläutert sind.

Es zeigen:
- Fig. 1: eine erfindungsgemäße Vorrichtung in einer teilweise geschnittenen Ansicht senkrecht zur Filmdurchlaufrichtung,
- Fig. 2: die Vorrichtung gemäß Fig. 1 im Grundriß,
- Fig. 3: eine Seitenansicht der Vorrichtung in Richtung der Pfeile III-III in Fig. 2 und
- Fig. 4: eine Einzelheit der Filmaufnahme in der selben Richtung wie in Fig. 3.
- Fig. 5: eine zweite Ausführungsform der Erfindung mit mehreren Zeilen von Abbildungselementen.

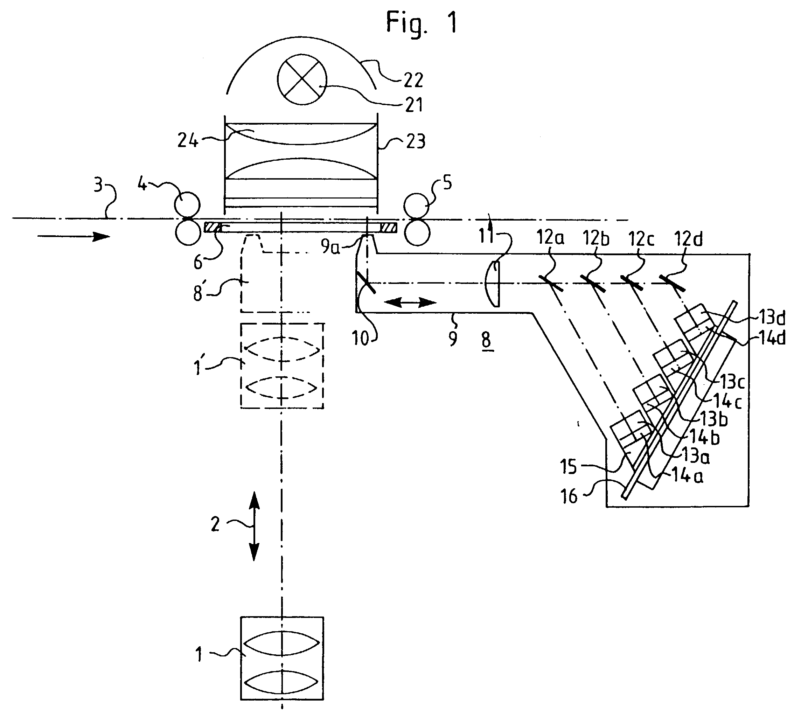

In Fig. 1 ist mit 1 ein Objektiv bezeichnet, das eine in der Filmebene 3 in einem Kopierfenster 6 liegende Kopiervorlage scharf auf ein nicht dargestelltes Kopiermaterialband abbildet. Die Vorlage wird dabei durchleuchtet durch eine in Richtung der optischen Achse des Objektivs 1 über der Filmebene 3 angebrachte Kopierlichtquelle 21, deren Licht durch einen Reflektor 22 durch in einem Lichtschacht 23 angeordnete Kondensorlinsen 24 auf eine übliche Streuscheibe geworfen wird, die ihrerseits die Vorlage im Fenster 6 ausleuchtet.

Das Objektiv 1 ist längs der optischen Achse in Richtung des Pfeiles 2 nach oben und unten verfahrbar. Die mit 1' bezeichnete, gestrichelte Stellung des Objektivs zeigt dabei die Position des Objektivs 1 mit dem geringsten Abstand zur Filmebene 3, d. h., die Position, in der die Vorlage mit dem größten Abbildungsmaßstab auf das lichtempfindliche Material abgebildet wird.

Das Kopiergerät, in dem sich die erfindungsgemäße Abtasteinrichtung befindet, arbeitet nach dem selben Prinzip wie das in der DE-OS 34 37 222 beschriebene, d. h., Filme mit mehreren Kopiervorlagen werden zunächst in Richtung des Pfeiles von links durch den Kopierbereich hindurch befördert, dann an einer Abtasteinrichtung 8 vorbei und in eine nicht gezeigte Aufspuleinrichtung geführt, bis der gesamte Film an der Abtasteinrichtung 8 vorbeigeführt ist. Danach erfolgt schrittweise während der entgegengesetzten Bewegung der Kopiervorgang, wobei die während des Abtastvorgangs gewonnenen Meßwerte zur Positionierung der Vorlagen im Kopierfenster 6 und zur Steuerung der Kopierlichtmengen benutzt werden. Dazu sind in Einspulrichtung vor dem Kopierfenster Transportrollen 4 angeordnet, die den Anfang eines eingeführten Films erfassen, diesen auf Filmführungskanten 7 nach rechts schieben bis zum Erfassen durch ein zweites Transportrollenpaar 5, das dann den Film in bekannter Weise in die Aufspuleinrichtung weiter fördert. An dem in der Fig. 1 rechten Seitenrand des Kopierfensters 6 ist ein Lichteintrittsspalt 9 einer Abtasteinrichtung 8 angeordnet, die wie folgt aufgebaut ist: Unterhalb des Eintrittsspaltes 9a befindet sich unter 45° zur Filmebene 3 geneigt ein Umlenkspiegel 10, der durch die Kopiervorlage in den Spalt 9a eindringendes Licht in die Horizontale oder in eine parallele Ebene zur Filmebene umlenkt in ein Objektiv 11 hinein, welches über Strahlenteilerspiegel 12a, 12b, 12c und 12d eventuell bereits dichroitisch nach Farben getrennt das Licht unter wiederum 45° nach unten auf Meßzellenzeilen 14a, b, c und d wirft. Objektiv und Position der Meßzellenzeilen sind dabei so gewählt, daß der Filmstreifen oberhalb des Spalts 9a gerade scharf auf der Oberfläche der Meßzellenzeiien abgebildet wird. Vor den Meßzellenzeilen sind dabei Farbfilter 13b, c und d angeordnet, die jeweils eine der Meßzellenzeilen für eine der drei Grundfarben rot, grün oder blau empfindlich machen. Die erste Meßzellenzeile bleibt ungefärbt und liefert einen Grauwert, der sowohl für die Abtastung der Bildstege als auch für die Dichtebemessung benutzt werden kann. Die Meßzellenzeilen 14a-d sind dabei auf einem stufenförmig ausgebildeten Träger 15 so angeordnet, daß ihre Oberfläche gerade senkrecht zum einfallenden Licht steht. In dem Träger mit direkter Verbindung ist eine Platte 16, die die erforderlichen Leitungen in geätzter Form in einer Kupferfolie enthält, um die Meßwerte der einzelnen Abschnitte der Meßzellenzeilen einer Auswertevorrichtung - insbesondere einem Mikroprozessor - zuzuführen, der jedoch nicht Gegenstand dieser Erfindung ist.

Die Meßzellenzeilen 14 mit ihrem Träger, das Objektiv 11 und die Spiegel 10, 12 sind in einem Gehäuse 9 enthalten, das den gesamten Aufbau lichtdicht umschließt. Dieses Gehäuse 9 ist an seiner im Grundriß dem Betrachter zugekehrten Seite mit wälzkörpergelagerten Führungsschienen 18 versehen, die mit ihrem gerätefesten Teil an einer Platte 17 befestigt sind. An dieser Platte ist auch ein Schrittmotor 19 mit Achse senkrecht zur Plattenebene angebracht, der auf der Innenseite der Platte ein Ritzel 19a aufweist, welches mit einer Zahnstange 20 im Eingriff ist, die an dem Gehäuse 9 angeordnet ist. Da der Motor 19 als Schrittmotor mit Tachogenerator ausgebildet ist, kann eine geeignete Steuereinrichtung über den Motor eine Bewegung des gesamten Gehäuses 9 mit der Abtasteinrichtung 8 in Fig. 1 nach links durchführen, bis der Eintrittsspalt 9a den linken Rand des Bildfensters 6 erreicht hat. Die Bauhöhe des Gehäuses 9 im Bereich des Spiegels 10 ist dabei so bemessen, daß sie auf jeden Fall kleiner ist als der Abstand zwischen der Filmebene 3 und dem Objektiv 1 in seiner Stellung mit dem geringsten Abstand zur Filmebene 3, die gestrichelt dargestellt und mit 1' bezeichnet ist.

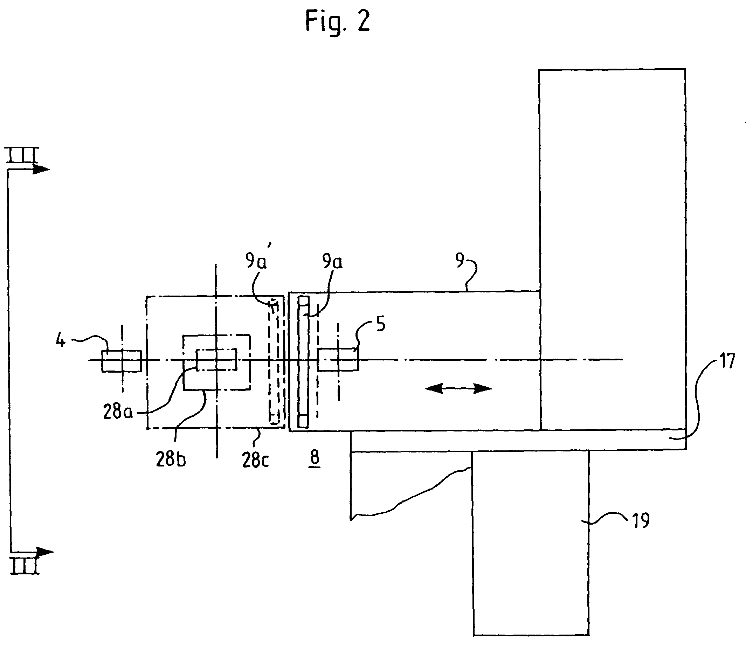

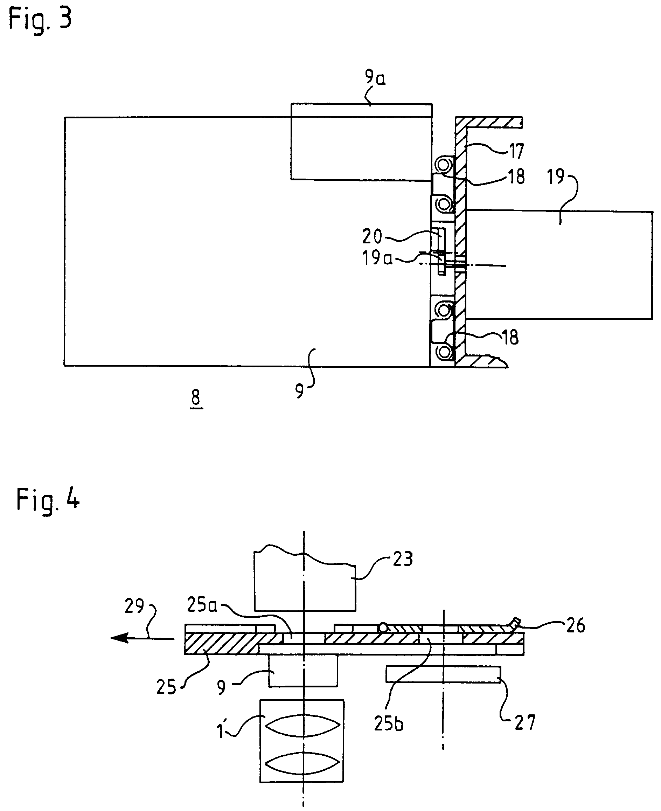

Die Einrichtung ist auch in der Lage, unterschiedliche Filmformate zu verarbeiten. Dies ergibt sich aus Fig. 2, wo verschiedene Vorlagenformate 28a, 28b und 28c gestrichelt dargestellt sind. Die jeweils für eine Filmbreite zutreffenden Führungs- und Halteeinrichtungen sind in einer austauschbaren Maskenplatte vorgesehen, die in Fig. 4 dargestellt und nachfolgend beschrieben ist. Je nach abzutastendem Format von Einzelvorlagen wird dabei der Eintrittsspalt 9 in eine Position gebracht, die zu Beginn der Bewegung außerhalb des Vorlagenformats im Kopierfenster liegt. Diese Position kann z. B. gemäß 9a' für die beiden kleineren Formate 28a und 28b näher an der optischen Achse liegen als für das Format 28c, wo eine Ausgangsposition 9a des Spaltes richtig ist.

In Fig. 4 sind noch weitere Einzelheiten dargestellt, die sich aus der Umstellung von Filmstreifen auf Einzelvorlagenverarbeitung ergeben. Dazu ist die Maskenplatte 25 senkrecht zur Filmtransportrichtung verschiebbar in dem Bereich zwischen den beiden Transportrollenpaaren 4 und 5 angeordnet. Die Maskenplatte 25 ist dabei in Richtung des Pfeiles 29 von der in der Figur dargestellten Ausgangsposition, in der ein Filmführungskanal 25a mit dem Bildfenster 6 in der Abbildungsposition ist, in eine zweite Endposition verschiebbar, in der ein Einzelbildfenster 25 symmetrisch zur optischen Achse angeordnet ist. Über dem Einzelbildfenster 25b ist eine Halteeinrichtung für den Film 26 angeordnet, die am vorderen, nach rechts gerichteten Rand eine Handhabe zum Anheben aufweist und um ihren hinteren Rand schwenkbar ist gegen die Kraft einer nicht näher dargestellten Feder. Zum Einführen einer Einzelvorlage in diese Vorrichtung ist sie in ihrer vorderen Endstellung, d. h., sie steht in der in der Fig. 4 dargestellten Position. Die Haltevorrichtung 26 wird angehoben und die Einzelvorlage unter die Haltevorrichtung eingeschoben. Ein Leuchtfeld 27 unter der Öffnung 25b ermöglicht dabei eine genaue Kontrolle des abgebildeten Bereiches, der in dem Fenster sichtbar ist. Eine so optimal positionierte Einzelvorlage wird dann mit der gesamten Maskenplatte 25 in Richtung des Pfeils 29 nach hinten geschoben bis zur Positionierung des Fensters 25b symmetrisch zur optischen Achse.

Die Wirkungsweise der beschriebenen Vorrichtung ist wie folgt:

Stehen für das Kopieren Filmstreifen an, so wird die Abtasteinrichtung 8 in die in Fig. 1 dargestellte Position gebracht, in der der Lichteintrittsspalt 9a die Position am rechten Rand außerhalb des Bildfensters 6 einnimmt. Diese Position ist abhängig von der Größe des Filmformates, wie sich anhand der gestrichelt gezeichneten Vorlagenformate 28a bis 28c in Fig. 2 ergibt. In dieser Ruhestellung der Abtastvorrichtung 2 wird der von den Transportrollen 4 erfaßte Film vorgeschoben bis zum Einlauf in das Rollenpaar 5. Damit beginnt der Abtastvorgang des durch die Lichtquelle 21 ausgeleuchteten Bereiches des Films über dem Eintrittsspalt 9a. Die Meßwerte für die einzelnen Bereiche in den drei Farben bzw. in der neutralen Dichte in Längsrichtung des Spaltes 9a quer zur Transportrichtung werden der Auswerteeinrichtung zugeführt, die sie etwa nach der Lehre der DE-PS 28 40 287 auswertet. Dies erfolgt für jede Zeile der Vorlage getrennt, jedoch zeitlich nacheinander, so daß nicht nur alle Meßwerte einer Vorlage erfaßt werden, sondern die Meßwerte aller Vorlagen in diesem Filmstreifen, bis das Filmende die Transportrollen 5 erreicht hat. Dann wird die Drehrichtung der Transportrollen 5, 4 umgedreht und der Kopiervorgang erfolgt im Filmrücklauf Vorlage für Vorlage mit den aus den Meßwerten ermittelten Kopierlichtmengen in den einzelnen Farben. Der Kopiervorgang ist dann beendet, wenn das zunächst vorlaufende, nunmehr nachlaufende Ende des Films die Transportrollen 4 wieder durchlaufen hat.

Zur Verarbeitung von Einzelbildvorlagen ist lediglich die Maskenplatte 25 in die in Fig. 4 gezeigte vordere Endstellung zu bringen, die Vorlage unter der Halteeinrichtung 26 über dem Einzelbildfenster 25b der Maskenplatte 25 zu positionieren und diese in Richtung des Pfeils 29 nach hinten zu schieben. Das Erreichen der hinteren Endstellung kann dann zum Beginn des Abtastvorgangs durch Ansteuerung des Schrittmotors 19 ausgenutzt werden. Dieser führt die Abtasteinrichtung mit dem Eintrittsspalt 9a des Gehäuses 9 schrittweise mit einer vorbekannten Geschwindigkeit über den Bereich des Kopierfensters 6 hinweg bis zum Erreichen des jenseitigen Anschlags. Entsprechend der Bewegungsgeschwindigkeit der Abtasteinrichtung 8 werden die Meßwerte von den Meßzellenzeilen 14 abgefragt und der Auswertevorrichtung zugeführt. Mit Abschluß des Abtastvorgangs wird der Schrittmotor 19 umgesteuert und die Abtasteinrichtung 8 in ihre in Fig. 1 dargestellte Stellung zurückgeführt. Danach kann aufgrund der ermittelten Meßwerte bzw. Kopierlichtmengen ohne weitere Veränderung am Gerät der Kopiervorgang für die einzelne Vorlage erfolgen.

Die Position des Eintrittsspalts 9a bzw. 9a' muß nicht immer am Rand der Vorlage angeordnet sein. Falls es z. B. Fragen der Ausleuchtung dieses Bereiches geraten erscheinen lassen, kann die Abtasteinrichtung für das Abtasten von Filmstreifen mit einer größeren Anzahl von Vorlagen auch in eine Stellung gebracht werden, in der der Spalt 9a in Deckung mit der optischen Achse ist. Die Abtasteinrichtung ist dann allerdings in eine Randstellung zurück zu bewegen, sowohl für das Kopieren von Filmstreifen als auch dann, wenn Einzelvorlagen verarbeitet werden sollen.

Die Geschwindigkeit der Abtasteinrichtung 8 während des Abtastvorgangs muß nicht die selbe sein wie die, mit der streifenförmige Filme relativ zur Abtasteinrichtung 8 bewegt werden, da die Zeit für das Abtasten des gesamten Filmes erheblich in die Bearbeitungszeit eines Films eingeht, die Abtastzeit für eine Einzelvorlage demgegenüber jedoch eine sehr geringe Rolle spielt. Das Bewegen der Abtasteinrichtung 8 über die feststehende Einzelvorlage hinweg kann deshalb wegen der verhältnismäßig großen Masse der Abtasteinrichtung vergleichsweise langsam erfolgen und die Antriebsvorrichtung entsprechend preiswert ausgeführt werden, ohne daß dadurch die Bearbeitungszeiten für Einzelvorlagen erheblich verlängert werden.

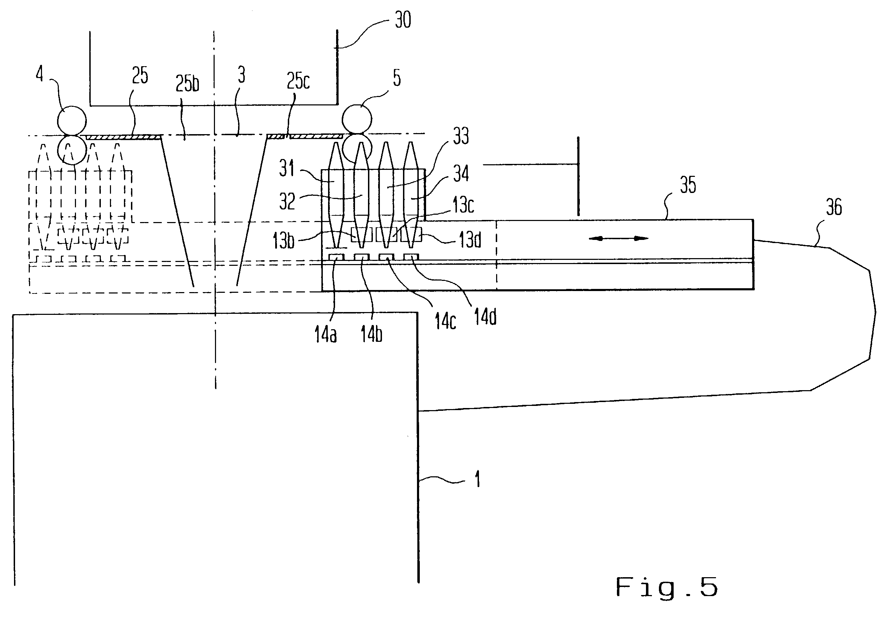

In Fig. 5 ist eine andere Ausführungsform der Erfindung dargestellt. Die Figur zeigt ebenso wie Fig. 1 einen Längsschnitt durch die Abtastanordnung. Funktionell gleiche Teile wie Transportrollen, Meßzellenzeilen und Kopierfenster haben dieselben Bezugszeichen wie in dem ersten Ausführungsbeispiel.

Der wesentliche Unterschied besteht in den optischen Übertragungselementen zwischen dem abzutastenden Filmbereich und den Meßzellenzeilen 14a bis 14d. Um den verhältnismäßig aufwendigen Strahlenteiler mittels der Spiegel 12a-d zu erübrigen, wird eine der gewünschten Anzahl von Meßwertarten entsprechende Anzahl von Abbildungselementzeilen eingesetzt, die jeweils zueinander parallel und senkrecht zur Filmtransportrichtung mit gewissem Abstand hintereinander auf einem verfahrbaren Träger angeordnet sind. Solche Zeilen von Abbildungselemente sind heute in sehr kleiner Bauform verhältnismäßig preisgünstig verfügbar, z. B. als Mikrolinsen mit einem Gradienten des Brechungsindex von der Mitte zum Rand der einzelnen Mikrolinsen. Diese haben z. B. in einer von der Firma Nippon Sheet Glass Co. Ltd., Tokyo, Japan gelieferten Ausführungsform als zweizeilige Linsenreihen eine Baulänge von 20 mm, bei einem Abstand zwischen dem Ende der Linse und der zugehörigen Gegenstandsebene von 12 mm. Es könnten aber auch einstückig gespritzte Reihen von Kunststofflinsen Verwendung finden, die mit röhrenförmigen Blendenanordnungen versehen sind, um ein Übersprechen von einem Abbildungsbereich in den anderen zu vermeiden. In diesem Fall müßte jeweils einer Meßzelle ein Abbildungselement zugeordnet werden. Die Seitenverkehrung bei einfacher optischer Abbildung würde dann nicht stören. Stattdessen könnte auch ein Abbildungssystem nach der Lehre der DE-PS 12 03 115 mit doppelter Bildumkehr und zwei Linsenebenen und dazwischen angeordneten Feldlinsen verwendet werden.

Die Abbildungselemente sind auf dem verfahrbaren Träger 35 so angeordnet, daß in der Vorlagenebene gerade die Filmebene 3 liegt, während in der Bildebene der Elemente 31 bis 34 die Oberfläche der Meßzellenzeilen 14a bis 14d liegt. Den Meßzellenzeilen sind wiederum, soweit sie farbsensibilisiert sein sollen, entsprechende Farbfilter 13b, c und d vorgeschaltet.

Der Träger 35 ist mit einem nicht näher dargestellten, in üblicher Weise einen Schrittmotor enthaltenden Antrieb versehen, der den Träger von der in der Fig. 5 ausgezogen dargestellten Position am rechten Rand des Kopierfensters 25b in die gestrichelt gezeichnete Position außerhalb des linken Randes des Kopierfensters und zurück verfahren kann. Die rechte Position ist die Ruhe- und Kopierstellung, wobei die Graudichtemeßzeile 14a unter einer Öffnung 25c außerhalb des Kopierfensters zum Erfassen der Filmperforationen und/oder der Graudichtewerte über die Filmbreite beim Filmdurchlauf liegt. Insbesondere bei nicht perforierten Filmen - z. B. vom Format 120 wird zum Wiederauffinden der Bildstege nach der Lehre der DE-OS 38 33 732 die Graudichte in einem feinen Spalt quer zur Transportrichtung gemessen. Schließlich kann der Schlitten 35 durch den Transport so weit verfahren werden, daß alle vier Abtastzeilen 14a-d innerhalb des Kopierfensters 25b liegen.

Die Wirkungsweise der beschriebenen Einrichtung ist wie folgt:

Das Lampenhaus 30 sorgt für eine gleichmäßige Ausleuchtung des Kopierfensters 25b einschließlich der Öffnung 25c. Bei durchlaufenden Filmen wird der Schlitten 35 in die Stellung gebracht, in der alle vier Abtastzeilen innerhalb des Kopierfensters liegen. An der Leitung 36 von den Abtastzeilen werden dann vier Signalfolgen geliefert, die der jeweiligen Farb- bzw. Graudichte in dem jeweils abgetasteten Streifen des Films entsprechen. Diese Meßwerte werden nun so in einen Speicher eingelesen, daß der jeweilige Abstand der Meßeinrichtungen berücksichtigt wird und für die Verarbeitung der Meßwerte die verschiedenen Farbdichtewerte eines Meßpunktes wieder zusammengeführt werden.

Für die Abtastung einer im Fenster 25b stehenden Vorlage wird zunächst der Schlitten 35 in die gestrichelt gezeichnete Stellung links außerhalb des Kopierfensters 25b gebracht. Diese Stellung kann zur Ersparnis von Wegen und damit Transportzeiten entsprechend dem jeweiligen abzutastenden Vorlagenformat bzw. der Größe des Kopierfensters mehr oder weniger weit links liegen.

Jedoch ist der Weg so zu wählen, daß das Abtastelement 34 gerade am linken Rand der Kopiervorlage liegt. Bei feststehender Vorlage wird dann der Schlitten 35 nach rechts bewegt und die Vorlage Zeile für Zeile abgetastet, bis die gesamte Abtasteinrichtung das Kopierfenster passiert hat und sich in die Ruhestellung bewegt hat und die Meßwerte in den Speicher eingelesen sind. Dann kann ohne weitere Umstellung unmittelbar der Kopiervorgang erfolgen.

## Patentansprüche

1. Verfahren zum bereichsweisen Ausmessen der Dichte von transparenten fotografischen Kopiervorlagen in einem fotografischen Projektions-Kopiergerät mittels einer Relativbewegung zwischen der Vorlage und einer wenigstens eine Meßzeilenzelle enthaltenden Abtasteinrichtung, wobei zur Dichtemessung von Filmstreifen mit mehreren Vorlagen der Filmstreifen über die feststehende Abtasteinrichtung quer zu der Längsabmessung der Meßzellenzeile hinweg bewegt wird, dadurch gekennzeichnet. daß für die Messung von Einzelvorlagen diese im Kopierfenster gehalten werden und die Abtasteinrichtung über die feststehende Vorlage hinweg bewegt wird.

2. Projektions-Kopiergerät zur Durchfühung des Verfahrens nach Anspruch 1, mit einer zum bereichsweisen Ausmessen der Dichte von transparenten fotografischen Kopiervorlagen ausgebildeten, wenigstens eine Meßzellenzeile (14) enthaltenden Abtasteinrichtung (8), wobei zur Dichtemessung von Filmstreifen mit mehreren Vorlagen der Filmstreifen über die in oder neben dem Kopierfenster ortsfest positionierbare Abtasteinrichtung quer zu des Längsabmessung der Meßzellenzeile hirweg bewegbar ist, dadurch gekennzeichnet, daß Mittel vorgesehen sind um für die Messung von Einzelvorlagen diese im Kopierfenster zu halten, und daß die Abtasteinrichtung (8) in Filmtransportrichtung verschiebbar angeordnet ist mit einer Ruhestellung am Rand des Kopierfensters und einem Verschiebeweg über das Kopierfenster (25b) hinweg.

3. Vorrichtung nach Anspruch 2, dadurch gekennzeichnet, daß die Abtasteinrichtung (8) unter einem Lichteintrittspalt (9a) in der Nähe der Filmbahn einen Umlenkspiegel (6) aufweist, der den Meßlichtstrahlengang in eine zur Filmebene (3) parallele Ebene umlenkt, in der ein Objektiv (11) liegt, welches den Eintrittsspalt (9a) über entsprechende Strahlenteiler (12b, c. d) auf drei farbsensitive Meßzellenzeilen (14a, b, c) und/oder eine Zeile für die Graudichtewerte (14a) abbildet.

4. Vorrichtung nach Anspruch 3, dadurch gekennzeichnet, daß die Bauhöhe in Richtung der Achse des Abbildungsstrahlengangs eines den Umlenkspiegel (10) und den Meßlichtstrahlengang umschließenden Gehäuses (9) kleiner ist als der kleinste Abstand des Abbildungsobjektivs (1) von der Filmebene (3).

5. Vorrichtung nach Anspruch 2 oder 3, dadurch gekennzeichnet, daß das Kopierfenster (6) gebildet ist in einer je nach Vorlagenart austauschbaren, in zwei Stellungen verschiebbaren Maskenplatte (25), die in der ersten Stellung eine Filmführung (25a) für Filmstreifen mit Kopierfenster in den Kopierstrahlengang und in der zweiten Stellung ein Einzelbildfenster (25b) und eine Halteeinrichtung (26) für Einzelvorlagen in den Kopierstrahlengang bringt.

6. Vorrichtung nach Anspruch 5, dadurch gekennzeichnet, daß das Fenster (25b) für die Einzelvorlagen in der ersten Stellung der Maskenplatte (25) in einer frei zugänglichen Einführstellung ist und unter dem Fenster ein Beleuchtungsfeld (27) angeordnet ist.

7. Vorrichtung nach einem der Ansprüche 2 bis 6, dadurch gekennzeichnet, daß die Abtasteinrichtung (8) in wälzkörpergelagerten Führungsschienen (18) geführt ist mit einer Zahnstange (20), Ritzel (19a) und Schrittmotor (19) enthaltenden Antriebseinrichtung, deren Ausgangs- und Endposition jeweils durch die Längsabmessung des Kopierfensters für Einzelvorlagen in der Maskenplatte (25) gegeben ist.

8. Vorrichtung nach Anspruch 2, dadurch gekennzeichnet, daß die Abtasteinrichtung eine Vielzahl von als Zeilen (31, 32, 33 und 34) angeordneten optischen Abbildungselementen aufweist, die je einen abzutastenden, quer zur Transportrichtung verlaufenden Vorlagenstreifen (3) auf die Meßzellenzeilen (14a, 14b, 14c und 14d) abbilden.

9. Vorrichtung nach Anspruch 8, dadurch gekennzeichnet, daß die optischen Abbildungselemente als Mikrolinsen mit Gradientenverlauf des Brechungsindex oder als Linsen in einer einstückig gespritzten Linsenleiste mit Blendenanordnungen ausgebildet sind.

10. Vorrichtung nach Anspruch 8 oder 9, dadurch gekennzeichnet, daß für jede Farbe eine Abbildungselementzeile (31, 32, 33, 34) zueinander parallel auf einem in Filmtransportrichtung verfahrbaren Träger (35) angeordnet ist, in deren Bildebene und Abbildungsbereich jeweils eine mit Farbfiltern (13b, 13c, 13d) versehene Meßzellenzeile (14a, 14b, 14c und 14d) auf dem Träger (35) befestigt ist.

11. Vorrichtung nach Anspruch 10, dadurch gekennzeichnet, daß die Meßzellenzeilen (14a, 14b, 14c, 14d) an einen Rechner mit Meßwertspeicher anschließbar sind, der die Meßwerte der einzelnen Vorlagenpunkte unter Berücksichtigung des Versatzes der Meßzellenzeilen (14a-d) zusammenführt.

12. Vorrichtung nach einem der Ansprüche 8 bis 11, dadurch gekennzeichnet, daß die Meßzellenzeilen (14a-d) etwa auf eine knappe Bildlänge verteilt sind und eine Antriebsvorrichtung für den verfahrbaren Träger (35) vorgesehen ist, die diesen zwischen einer Kopier- und Ruhestellung außerhalb des Kopierfensters (25b) und mit einer Graudichtemeßzeile (31/14a) zur Abtastung der Graudichtewerte zur Positionierung der Vorlage in der Ruhestellung an einer Seite des Kopierfensters (25a) und einer Anfangsstellung für die Abtastung von stehenden Vorlagen auf der anderen Seite außerhalb des Kopierfensters hin und her bewegt und für die Abtastung durchlaufender Filme den Träger (35) in eine Abtaststellung mit den Meßzellenzeilen (14a-d) innerhalb des Kopierfensters (25a) bringt.

13. Vorrichtung nach einem der vorangehenden Ansprüche 8 bis 12, dadurch gekennzeichnet, daß zumindest die jeweils auf der Seite der Abtastanordung (8) liegende Rolle der Filmtransportrollenpaare (4, 5) so bemessen ist, daß ihr Durchmesser kleiner ist als der Abstand zwischen dem Abbildungselement (31-34) und seiner Gegenstandsebene.

14. Vorrichtung nach Anspruch 8, dadurch gekennzeichnet, daß die optischen Abbildungselemente als Mikrolinsen mit Gradientenverlauf des Brechungsindex oder als Linsen einer einstückig gespritzten Linsenleiste ausgebildet sind.

## Claims

1. Method of measuring in sections the density of transparent photographic masters in a photographic projection copier by means of a relative movement between the master and a scanning device comprising at least one measuring line cell, whereby for measuring the density of film strips with a plurality of masters the film strip is moved across the stationary scanning device at right angles to the longitudinal dimension of the measuring cell line, characterized in that for measuring individual masters, the latter are held in the copying aperture and the scanning device is moved across the stationary master.

2. Projection copier for effecting the method according to claim 1, having a scanning device (8) designed for measuring in sections the density of transparent photographic masters and comprising at least one measuring cell line (14), wherein for measuring the density of film strips having a plurality of masters the film strip is movable across the scanning device, which is positionable in a stationary manner in or adjacent to the copying aperture, at right angles to the longitudinal dimension of the measuring cell line, characterized in that means are provided in order, for the purpose of measuring individual masters, to hold the latter in the copying aperture, and the scanning device (8) is disposed displaceably in film transport direction with an idle position at the edge of the copying aperture and a displacement path across the copying aperture (25b).

3. Device according to claim 2, characterized in that the scanning device (8) below a light entrance gap (9a) in the vicinity of the runner plate has a deviation mirror (6) which deflects the path of the measuring light beam into a plane, which is parallel to the film plane (3) and in which a lens (11) lies, which projects the entrance gap (9a) by way of suitable beam splitters (12b, c, d) onto three colour-sensitive measuring cell lines (14a, b, c) and/or a line for the grey density values (14a).

4. Device according to claim 3, characterized in that the overall height in the direction of the axis of the projection beam path of a housing (9), which encloses the deviation mirror (10) and the measuring light beam path, is smaller than the minimum distance of the projection lens (1) from the film plane (3).

5. Device according to claim 2 or 3, characterized in that the copying aperture (6) is formed in a mask plate (25) which is exchangeable depending on the type of master, is displaceable into two positions, in the first position brings a film guide (25a) for film strips with copying aperture into the copying beam path and in the second position brings a single-frame aperture (25b) and a holding device (26) for individual masters into the copying beam path.

6. Device according to claim 5, characterized in that the aperture (25b) for the individual masters in the first position of the mask plate (25) is in a freely accessible insertion position and a lighting field (27) is disposed below the aperture.

7. Device according to one of claims 2 to 6, characterized in that the scanning device (8) is guided in guide rails (18), which are supported by rolling bodies, by means of a drive device which comprises toothed rack (20), pinion (19a) and stepping motor (19) and whose initial and end positions are in each case determined by the longitudinal dimension of the copying aperture for individual masters in the mask plate (25).

8. Device according to claim 2, characterized in that the scanning device comprises a plurality of optical imaging elements, which are arranged in lines (31, 32, 33 and 34) and each project a master strip (3), which is to be scanned and extends at right angles to the transport direction, onto the measuring cell lines (14a, 14b, 14c and 14d).

9. Device according to claim 8, characterized in that the optical imaging elements take the form of micro-lenses with a graded refractive index or lenses in an integrally injection-moulded lens strip with stop arrangements.

10. Device according to claim 8 or 9, characterized in that one imaging element line (31, 32, 33, 34) for each colour is disposed parallel to one another on a carrier (35) movable in film transport direction, a measuring cell line (14a, 14b, 14c, 14d) provided with colour filters (13b, 13c, 13d) being fastened on the carrier (35) in the image plane and projection range of each of said imaging element lines.

11. Device according to claim 10, characterized in that the measuring cell lines (14a, 14b, 14c, 14d) are connectable to a computer with measured value storage, which brings together the measured values of the individual master points while taking into account the offset of the measuring cell lines (14a-d).

12. Device according to one of claims 8 to 11, characterized in that the measuring cell lines (14a-d) are distributed substantially along the bare length of an image and a drive device for the movable carrier (35) is provided, which moves said carrier back and forth between a copying and idle position outside of the copying aperture (25b) and having a grey density measuring line (31/14a) for scanning the grey density values for positioning the master in the idle position to one side of the copying aperture (25a) and an initial position for scanning stationary masters at the other side outside of the copying aperture and, for the scanning of continuous films, brings the carrier (35) into a scanning position with the measuring cell lines (14a-d) inside the copying aperture (25a).

13. Device according to one of the preceding claims 8 to 12, characterized in that at least the roller of the film transport roller pairs (4, 5) which is situated in each case on the side of the scanning arrangement (8) is so dimensioned that its diameter is smaller than the distance between the imaging element (31-34) and its object plane.

14. Device according to claim 8, characterized in that the optical imaging elements take the form of micro-lenses with a graded refractive index or lenses of an integrally injection-moulded lens strip.

## Revendications

1. Procédé pour mesurer, zone par zone, la densité d'originaux photographiques transparents à tirer dans une tireuse de projection photographique au moyen d'un mouvement relatif entre l'original et un dispositif d'exploration contenant au moins une ligne de cellules de mesure, procédé dans le cas duquel, pour mesurer la densité de bandes de film contenant plusieurs originaux, la bande de film se déplace le long du dispositif d'exploration, fixe, perpendiculairement à l'extension longitudinale de la ligne de cellules de mesure, caractérisé par le fait que pour mesurer les originaux individuels, ceux-ci sont maintenus dans la fenêtre de tirage et c'est le dispositif d'exploration qui se déplace le long de l'original, fixe.

2. Tireuse de projection pour la mise en oeuvre du procédé selon la revendication 1, présentant un dispositif d'exploration (8) conçu pour mesurer, zone par zone, la densité d'originaux photographiques transparents à tirer et contenant au moins une ligne de cellules de mesure (14), tireuse dans le cas de laquelle, pour mesurer la densité de bandes de film contenant plusieurs originaux, la bande de film peut se déplacer le long du dispositif d'exploration, qui peut être placé en un point fixe, dans ou près de la fenêtre de tirage, perpendiculairement à l'extension longitudinale de la ligne de cellules de mesure, caractérisée par le fait que des moyens sont prévus pour tenir les originaux individuels dans la fenêtre de tirage pour la mesure de ces originaux individuels et que le dispositif d'exploration (8) est disposé avec liberté de coulisser selon la direction de transport du film, avec une position de repos sur le bord de la fenêtre de tirage et une course de coulissement le long de la fenêtre de tirage (25b).

3. Dispositif selon la revendication 2, caractérisé par le fait que le dispositif d'exploration (8) présente, sous une fente (9a) d'entrée de la lumière, au voisinage de la bande de film, un miroir de changement de direction (6) qui change la direction du chemin des faisceaux de la lumière de mesure pour les envoyer dans un plan parallèle au plan du film (3), dans lequel se trouve un objectif 11) qui, au moyen de diviseurs de faisceaux appropriés (12b, c, d), forme l'image de la fente d'entrée (9a) sur trois lignes de cellule de mesure (14a, b, c) sensibles à la couleur et/ou sur une ligne pour les valeurs de densité de gris (14a).

4. Dispositif selon la revendication 3, caractérisé par le fait que, selon la direction de l'axe du chemin des faisceaux de la formation de l'image, la hauteur d'un boîtier (9) contenant le miroir de changement de direction (10) et le chemin des faisceaux de la lumière de mesure est inférieure à la plus petite distance entre l'objectif (1) de formation de l'image et le plan du film (3).

5. Dispositif selon la revendication 2 ou 3, caractérisé par le fait que la fenêtre de tirage (6) est formée dans une plaque de masque (25) qui peut s'échanger selon chaque fois le type d'original, peut coulisser pour venir dans deux positions, et qui, dans la première position, amène sur le chemin des rayons de tirage, un guidage (25a) pour les bandes de film avec fenêtre de tirage et, dans la seconde position, amène sur le chemin des rayons de tirage une fenêtre (25b) pour vue individuelle et un dispositif de maintien (26) pour originaux individuels.

6. Dispositif selon la revendication 5, caractérisé par le fait que, dans la première position de la plaque de masque (25), la fenêtre (25b) prévue pour les originaux individuels se trouve dans une position d'introduction librement accessible et que sous la fenêtre est disposé un champ d'éclairement (27).

7. Dispositif selon l'une des revendication 2 à 6,, caractérisé par le fait que le dispositif d'exploration (8) est guidé dans des rails de guidage (18) portant sur des galets, avec un mécanisme d'entraînement contenant une crémaillère (20), un pignon (19a) et un moteur pas à pas (19) dont les positions initiale et finale sont chacune données par l'extension longitudinale de la fenêtre de tirage pour les originaux individuels dans la plaque de masque (25).

8. Dispositif selon la revendication 2, caractérisé par le fait que le dispositif d'exploration présente une pluralité d'éléments optiques de formation d'image qui sont disposés en lignes (31, 32, 33 et 34) et qui donnent chacun, sur les lignes de cellules de mesure (14a, 14b, 14c et 14d), l'image d'une bande d'originaux (3) à explorer et s'étendant perpendiculairement au sens du transport.

9. Dispositif selon la revendication 8, caractérisé par le fait que les éléments optiques de formation d'image sont conçus sous forme de microlentilles avec gradient de l'indice de réfraction ou sous forme de lentilles dans une barrette de lentilles coulées d'une seule pièce avec dispositifs de diaphragme.

10. Dispositif selon la revendication 8 ou 9, caractérisé par le fait que, pour chaque couleur, une ligne (31, 32, 33, 34) d'éléments de formation d'image est disposée, parallèlement les unes aux autres, sur un support (35) qui est mobile selon la direction de transport du film et dans le plan d'image et la zone de formation d'image de laquelle est chaque fois fixée, sur le support (35), une ligne de cellules de mesure (14a, 14b, 14c et 14d) munie de filtres colorés (13b, 13c, 13d).

11. Dispositif selon la revendication 10, caractérisé par le fait que les lignes de cellules de mesure (14a, 14d, 14c, 14d) peuvent être reliées à un ordinateur avec mémoire de valeurs de mesure qui réunit les valeurs de mesure des différents points de l'original en tenant compte du décalage des lignes de cellules de mesure (14a-d).

12. Dispositif selon l'une des revendications 8 à 11, caractérisé par le fait que les lignes de cellules de mesure (14a-d) sont à peu près réparties tout juste sur une longueur d'image et qu'est prévu pour le support mobile (35) un mécanisme d'entraînement qui déplace en va-et-vient ce support mobile entre une position de tirage et de repos, à l'extérieur de la fenêtre de tirage (25b) et avec une ligne (31/14a) de mesure de la densité de gris pour explorer les valeurs de densité de gris pour le positionnement de l'original à la position de repos d'un côté de la fenêtre de tirage (25a) et une position initiale pour l'exploration d'originaux fixes de l'autre côté, à l'extérieur de la fenêtre de tirage, et qui, pour l'exploration de films passant en continu, amène le support (35) dans une position d'exploration avec les lignes de cellules de mesure (14a-d) à l'intérieur de la fenêtre de tirage (25a).

13. Dispositif selon l'une des revendications précédentes 8 à 12, caractérisé par le fait qu'au moins le rouleau, respectivement situé du côté du dispositif d'exploration (8), de la paire (4,5) de rouleaux de transport du film est dimensionné de façon que son diamètre soit inférieur à la distance entre l'élément de formation d'image (31-34) et son plan d'objet.

14. Dispositif selon la revendication 8, caractérisé par le fait que les éléments optiques de formation d'image sont conçus en tant que avec gradient de l'indice de réfraction ou en tant que lentilles d'une barrette de lentilles injectée d'une seule pièce.
